# EUROPEAN PATENT APPLICATION

(11) **EP 2 192 557 A1**
(43) Date of publication of application: **02.06.2010**
(21) Application number: 09169819.1
(22) Date of filing: 09.09.2009
(51) Int. Cl.: G07B 17/00

(54) **Method of postal fraud detection for stamps activated at point of sale**

(30) Priority: 01.12.2008 US 325561
(71) Applicant: PITNEY BOWES INC., Stamford CT 06926-0700 (US)
(72) Inventor: Rathbun, Darryl T., Stratford, CT 06615 (US); Ryan, Frederick W., Jr., Oxford, CT 06615 (US); Foth, Thomas J., Trumball, CT 06611 (US); Blumberg, Stephen L., Waterford, CT 06385 (US)
(74) Representative: HOFFMANN EITLE

(57) **Abstract**

A method of paying for postage stamps, that involves offering (302) a postage stamp (12) for sale by a distributor to a consumer, wherein the stamp (12) has a unique identification code and is initially inactive; distributing (316) the postage stamp to the consumer; activating the stamp for use; and accounting with the distributor for postage associated with the stamp after the stamp has been distributed to the consumer.

## Description

The invention relates generally to the field of postage stamps and more particularly, to postage stamps having Information Based Indicia.

It is a common practice throughout the world to use postage stamps as an indication that postage has been paid for the delivery of a mailpiece. These postage stamps are typically produced and issued by a government agency and procured for use by the general public. The postage stamps can either be obtained at a local post office or can be procured out of a postal vending machine. Moreover, for certain holidays or for certain special events the postal authority often produces a limited number of special edition or commemorative stamps which are distributed for sale and used for the payment of postage or alternatively are saved as a collector's item.

Post Offices have also found that it is desirable to permit a consumer to obtain a postage stamp which can be personally customized in appearance by the consumer.

Currently the United States Postal Services allows mailers to use their desktop computer and printer to apply postage in the form of an Information-Based Indicia (IBI) directly onto envelopes or labels while applying an address. The IBI consists of a two-dimensional bar code containing eighty nine bytes of information about the mail piece and certain human-readable information. The indicium includes a digital signature to preclude the forgery of indicia by unauthorized parties.

The IBI technology of the United States Postal Service (USPS) offers the postal customer a way to pay for postage without stamps. Envelopes are franked using the postal customer's personal computer, a local or remote Postal Security Device add-on, and the customer's printer. The Postal Security Device provides postal value storage and the link to the USPS and the manufacturer of the personal computer compatible add-on.

Presently, not every mailpiece is scanned by the USPS. Because of this, it is impossible to use the originator information in an IBI to charge the originator for the postage. The foregoing is one reason why the USPS requires the postage to be pre-paid before the mailpiece enters the mail stream.

At this time the USPS is interested in increasing their retail presence and availability of postal products. The USPS permits several different modes for paying for postage, which include postal indicia, permit mail, and stamps. None of the above is conducive to selling at a retail environment. Postal indicia require a meter that ties up funds in a prepaid account and produces a monochromatic imprint that is not considered appropriate for personal mail. Permit mail requires extensive processes for controlled acceptance, requires a minimum number of mailpieces be inducted simultaneously and is even less appropriate for personal mail. Stamps are appropriate for personal mail, but since they are actual payment for postage, instead of evidence of payment like indicia or paid at controlled acceptance like permit mail, retailers do not like to use stamps. There are three issues which prevent retailers from carrying stamps: cost of inventory, risk of theft, and inventory can become outdated after postal rate changes.

Stamps tie up retailer funds in inventory and are perceived to be a primary target for theft since they equate to a cash value. Also, in order to have a diverse inventory of stamp pictures, even more stamps must be tied up in inventory. As a result, retailers often provide minimum service by only having one type of stamp (e.g. books of twenty standard 1-ounce rate flag stamps) to limit their inventory costs.

The risk of theft is another deterrent for retailers to carry stamps. Stolen stamps are still genuine postage and cannot be differentiated from stamps that were obtained legally. Therefore, they cannot be "deactivated" nor can they even be individually traced. To prevent theft, retailers are required to lock up their stamps in drawers under the supervision of cashiers and frequently audit stamp inventory. As a result, they miss an opportunity on the visual advertising aspects, of the impulse buyers, and other marketing techniques. Buyers are often not even aware that the store sells stamps unless they ask.

The final problem is that stamps lose their usefulness after a postal rate change. Forever stamps do not lose their usefulness after a rate change, but are only available in limited styles and application (e.g. one ounce first class rate). Stamps other than forever stamps (e.g. special value stamps or stamps with a vanity/special image) are still valid postage for the value indicated on the stamp, but very few people want to have to buy stamps with the "old rate" and buy "make-up rate" stamps in addition. Therefore, the retailers will end up with undesired postage after a postal rate change and will also need to carry rate makeup stamps in addition.

Customized Postage, such as Pitney Bowes Stamp Expressions Sheet of Stamps product, is created with an Information Based Indicia (IBI) that has a unique identification (ID) consisting of the meter vendor ID, meter ID, and a piece count. This ID is unique and therefore individually identifiable. However, there is no current method to differentiate legally purchased Customized Postage from stolen Customized Postage. Likewise, since these stamps are created from a meter in a similar process as an indicium, the postal value has already been paid to the USPS, so it does not solve the problem of the retailer tying up funds in postage.

One of the disadvantages of the prior art is that currently customized postage stamps must be paid for prior to the stamps printing.

Another disadvantage of the prior art is that customized postage stamps may be printed at retail stores on-demand, but only if strict procedures are adhered to.

A further disadvantage of the prior art is that under current regulations unused customized postage stamps are not refundable.

A still further disadvantage of the prior art is that is that for seasonal offerings a retailer may tie up funds for over a year if they are to use the stamps again, and a rate change is likely to make the stamps undesirable.

An additional disadvantage of the prior art is that special event customized stamp inventory will be useless shortly after the event.

Another disadvantage of the prior art is that retailers may not want to inventory customized postage stamps near the time of an impending rate change.

This invention overcomes the disadvantages of the prior art by providing a method that solves the problems of inventory cost, risk of theft, and outdated inventory, for customized postage stamps containing an IBI and/or any postage stamp containing an IBI. This invention adds the IBI identification code appearing on customized postage stamps to a duplicates database that is currently maintained by the USPS to invalidate the stamps at their creation, and then removes the IBI identification code from the duplicates database to validate the stamps at some later point after they have been properly purchased. Whenever the IBI identification code appearing on customized postage stamps is scanned, the duplicate detection process determines that if the IBI identification code is found in the duplicates database (which indicates it is either a duplicate or has not yet been activated). If the mailpiece containing the IBI identification code is found in the duplicates database, the mailpiece is removed from the mail stream and held pending a fraud or theft investigation. If it is not in the duplicates database, it is added to the database to prevent its reuse.

Payment for postage may be made by a retail merchant at the point of sale, by a purchaser after the sale, or when the customized postage stamp is scanned by the post. In the preferred embodiment, the entity that pays the post for the postage is a third party, but it may also be the retailer or even the purchaser.

An advantage of this invention is that it solves the problems of inventory cost, risk of theft, and outdated inventory by: enabling postal payment for customized postage stamps to be made at some point after the actual printing of the stamps, such as the point of sale, prior to the stamps entering the mail stream or when the stamps are scanned by the posts during the delivery process. Thus, the customized postage stamp has no postal value until after it has been properly purchased.

An additional advantage of this invention is that it enables detection of customized postage stamps that have been stolen so that the mail pieces that the stamps are affixed to may be removed from the mail stream and potentially initiate a fraud or theft investigation.

A further advantage of this invention is that since the postal payment is not made until the stamps are sold to a customer at a retail establishment or at a later time, the customized postage stamps may be used as "forever stamps," marked for their particular purpose (e.g. first class one ounce rate), and charged the current cost for that rate.

A still further advantage of this invention is that it enables the stamps to be used for multiple denominations through the use of a database lookup that correlates the customized postage ID to the actual postage amount.
Fig. 1 is a drawing of a mailpiece having a customized stamp affixed thereto;
Fig. 2 is a drawing showing the customized stamp of Fig. 1, as one of a plurality of customized stamps on a sheet of stamps;
Fig. 3 is a diagram describing this invention;
Fig. 4 is a flow chart of a process for creation of customized postage that will be activated in the future;
Fig. 5 is a flow chart of a process for handling customized postage that is activated at the point of sale from the retail store and the post;
Fig. 6 is a flow chart for activating customized postage at point of sale; and
Fig. 7 is a summary of payment processing transactions between the post, customized postage processor and the retailer.

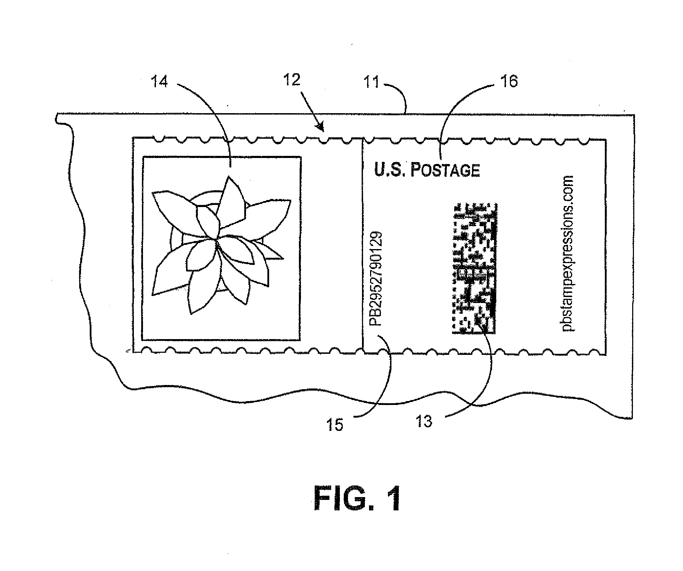

Referring now to the drawings in detail, and more particularly to Fig. 1, the reference character 11 represents a portion of a mailpiece, having a customized postage stamp 12 affixed thereto. Stamp 12 includes a Information Based Indicia (IBI), i.e., a two dimensional bar code 13, that uniquely identifies stamp 12, a customized stamp, i.e., a personalized picture, picture of noted personalities, natural scenes, artistic works, slogans, logos, etc. appear in area 14, a meter number 15 and the term U.S. Postage in space 16.

It would be obvious to one skilled in the art that bar code 13 may be implemented by any character string, linear barcode, 4-state barcode, steganographic mark (e.g., a watermark in an image), embedded within an RFID tag or any other symbology.

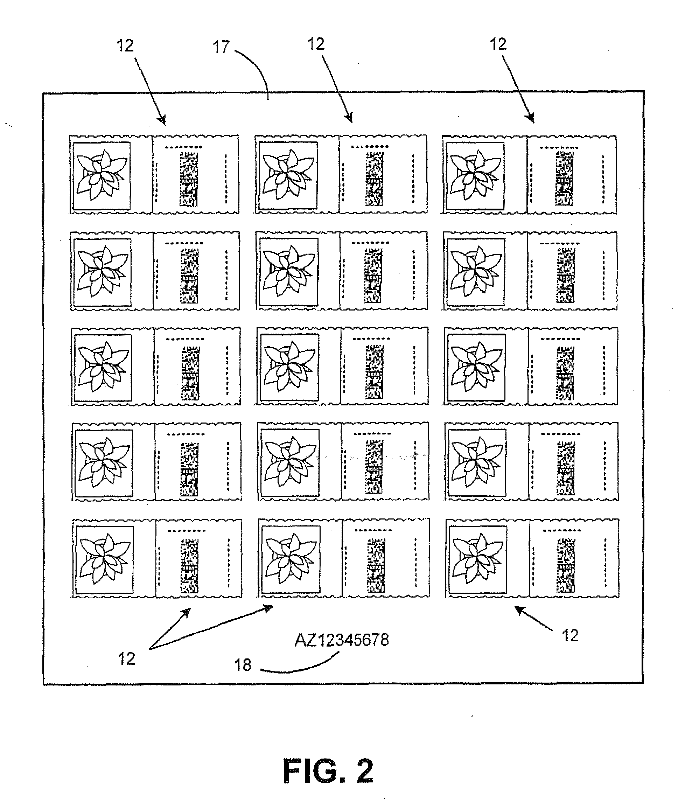

Fig. 2 is a drawing showing the customized stamp of Fig. 1, as one of a plurality of customized stamps on a sheet of stamps. Customized stamps 12 are arranged on a sheet 17 in a manner that stamps 12 may be removed from sheet 17 and still have enough adhesive to be affixed to a mail piece. Sheet 17 has a code 18 affixed thereto to uniquely identify the stamps 12 on sheet 17. Code 18 may be alphanumeric, glyphs, a bar code or any combination of the foregoing. Sheet 17 may be combined with similar sheets 17 to make a booklet of stamps.

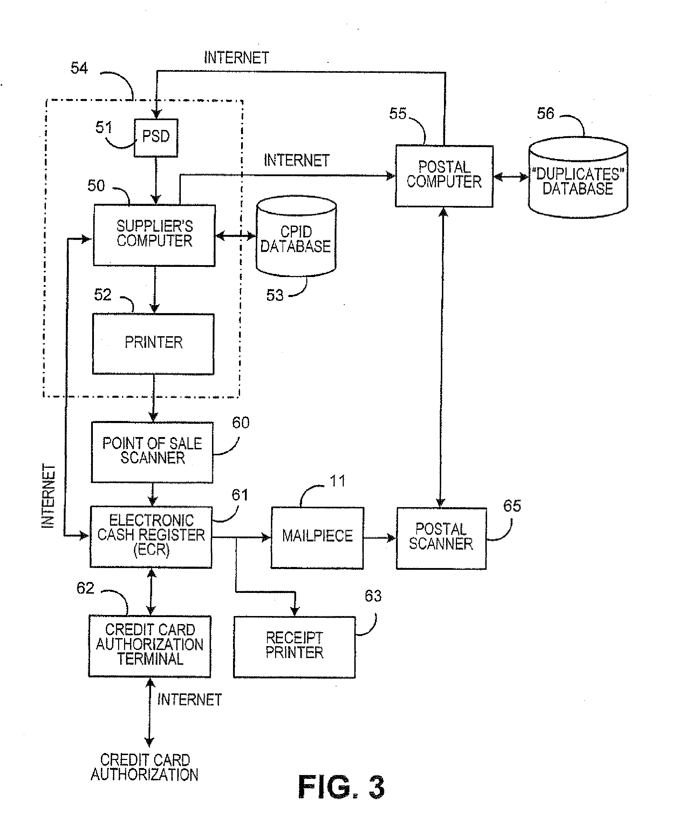

Fig. 3 is a diagram describing this invention. The invention prints customized stamps 12 on individual adhesive labels, envelopes, sheets that form booklets, and/or on sheet 17 (Fig. 2), disposes of the stamps by sale or gift, distributes the stamps and accounts for their usage. A supplier's, i.e., distributor's personal computer 50 is coupled to a postal security device 51, a printer 52 and a customized postage identification data base 53. Customized postage identification data base 53 contains customized postage identification, i.e., the information contained in bar code 13 (Fig. 1) and associated set identification codes 18 (Fig. 2). Computer 50, postal security device (PSD) 51 and printer 52 comprise a customized postage meter 54. Computer 50 is coupled to postal computer 55 via the Internet. Computer 55 is optionally coupled to PSD 51 via the Internet. Postal Computer 55 is also coupled to duplicates data base 56. The USPS normally stores the unique identifiers of IBI and customized postage stamps that have been processed in duplicates database 56 in order to detect attempts to reuse the unique identifier's or IBI's to obtain free postage. The invention adds to duplicates data base 56 unique identifiers for each customized stamp 12, e.g., the piece count and PSD/meter identification number contained in two dimensional bar code 13, that have been created to invalidate the stamps at their creation. It should be noted that the unique identifiers may also be stored as groups or ranges rather than individually in order to reduce the storage requirements for duplicate database 56.

Printer 52 of meter 54 will be able to print stamps 12 containing two dimensional bar codes 13 (Fig. 1), as well as personalized pictures in area 14 of stamps 12. Meter 54 produces one or more stamps 12, which may be an individual stamp 12, or a set of stamps contained in a sheet 17 or one or more sheets 17 combined to form a booklet. The unique number contained in code 13 on stamp 12 and the code 18 that identifies each stamp 12 on sheet 17 will be transmitted and stored in a memory in computer 50 and in data base 53. Meter 54 may be located at a central production site, a retail establishment, an office or a home. The Post may charge additional funds for the production and /or use of customized stamps 12. Printer 52 may produce stamps 12 in color or black and white on various types of paper known in the art.

It should be noted that meter 54 may be located in a single location or distributed between multiple locations. For example the postage printer 52 may be located at a retail establishment or distribution center while supplier's computer 50 and PSD 51 may be located within a postage vendor's data center. Similarly computer 50 and printer 52 may be located at a retail establishment while PSD 51 is located within a postage vendor's or postal data center. It should also be noted that PSD 51 may be a physical device, a software module or a combination of the two.

If meter 54 is not located at a retail establishment, stamps 12 are distributed to retail outlet where stamps 12 are scanned by point of sale scanner 60. When a customer purchases stamps 12 using cash, the payment is noted by electronic cash register 61 and notification of the payment is transmitted to computer 50 via the Internet. When a customer purchases stamps 12 using a credit card, the retailer checks the customer's credit by utilizing credit card authorization terminal 62 and receives a favorable or unfavorable response from a credit card authorization bureau via the Internet. Electronic cash register 61 is notified of the credit card purchase and transmits the purchase information to computer 50 via the Internet. Computer 50 transmits the information contained in bar codes 13 that uniquely identifies stamps 12 to computer 55. Computer 55 will then remove the unique identifiers contained in two dimensional bar code 13 that uniquely identifies stamps 12 from the duplicates database 56 to activate stamps 12. For cash and credit card purchases of stamps 12, electronic cash register 61 will cause receipt printer 63 to print a receipt for the stamps purchased. Mailpiece 11 containing stamp 12 will be scanned by postal scanner 65, and this information contained on stamp 12 will be transmitted to postal computer 55.

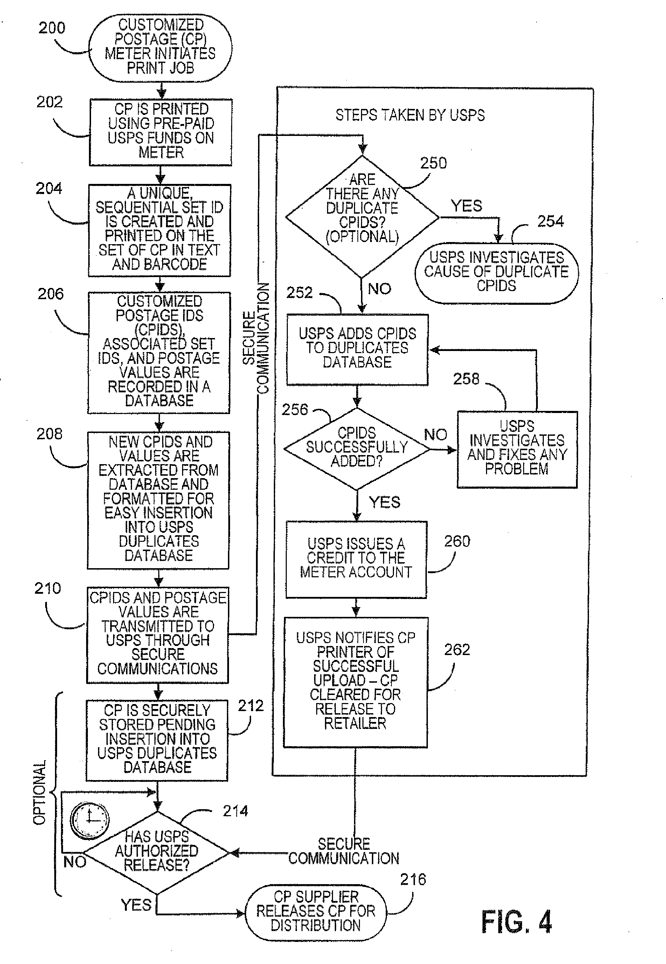

Fig. 4 is a flow chart of a process for creation of customized postage that will be activated in the future. The process begins in step 200 where customized postage meter 54 (Fig.3) initiates a print job. Then in step 202, customized postage is printed by printer 52 using the prepaid postal funds stored in PSD 51 of postage meter 54. Next, in step 204 a unique sequential set identification, code 18 (Fig. 2), is created and printed on the set of customized postage, sheet 17 (Fig. 2), in text and barcode. Then in step 206, the unique sequential set identification, unique identifier (contained in barcode 13) for each stamp 12 and postage value of each stamp 12 are recorded in customized postage identification data base 53 (Fig. 3). Next in step 208 the customized postage identifications, unique identifiers for stamps 12, and values are extracted from data base 53 and formatted for insertion into the post duplicates data base 56. In step 210 customized postage identifications and postage values are transmitted by computer 50 to the postal computer 55 through secure communications.

At this point the output from step 210 is transmitted to the input of step 250. Steps 250 through steps 262 are steps that will be taken by the post. Step 250 determines whether or not there are duplicate customized postage identification numbers that already exist in duplicates database 56. If it is determined that there are duplicate customized post identifications then the next step will be step 254. In step 254 the post investigates the cause of duplicate customized postage identifications, either system errors (e.g., retransmission) or potential fraudulent use of customized postage. In the event that Step 250 determines that there are no duplicate customized postage identifications then the next step in the process is step 252. In Step 252 the postal computer 55 adds the customized postage identification to the duplicates database 56. Then the next step is step 256. Step 256 determines whether or not the customized postage identifications have been successfully added. If step 256 determines that the customized postage identifications have not been successfully added the next step will be step 258 where the post investigates and fixes any problems. After the conclusion of step 258 the process will go back to step 252. If step 256 determines that customized postage identifications have been successfully added then the next step in the process will be step 260. In step 260 the post issues a credit to the customized postage supplier's meter 54 account. Then the next step in the process will be step 262 where the post notifies customized postage supplier's meter 54 that the customized postage identifications have been successfully uploaded and added to duplicates database 56, clearing the printed stamps 12 for release to the retailer. This notification will be transmitted to step 214 over a secure communications link.

Alternatively, after the completion of step 210 the next step in the process will be step 212. In step 212 the customized postage is securely stored pending insertion into the post duplicates database 56. The next step will be Step 214. In step 214 the post determines whether or not there has been an authorized release. If Step 214 determines that there has been an authorized release the next step in the process is Step 216 where the customized postage supplier releases the customize postage for distribution. In the event that Step 214 determines that there has not been an authorized release, issued by the post, the process will go back to the input of step 214.

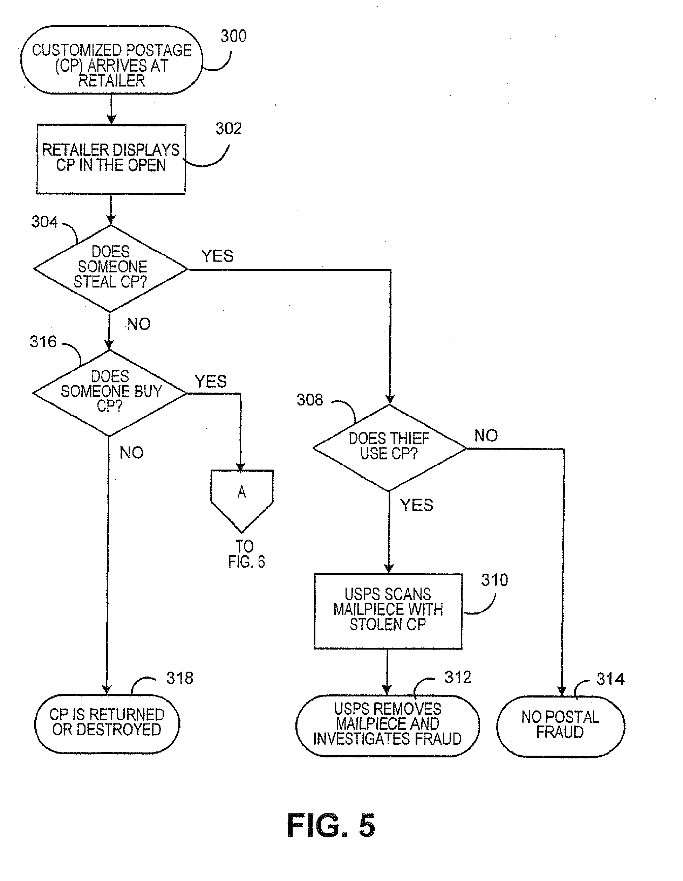

Fig. 5 is a flow chart of a process for handling customized postage that is activated at the point of sale from the retail store and the post. The process begins in Step 300 where sheets 17 (Fig 2.) of customized postage stamps 12 (Fig. 2) arrive at the retailer. Then in step 302, the retailer displays the customized postage sheets of stamps in the open for customers to view. It is possible that, at step 304 someone steals the customized postage stamps. If step 304 someone steals the customized postage stamps, the next step in the process is step 308. If, at step 308 the party, i.e. thief, who stole the customized postage stamps, chooses to use the customized postage stamps the stamps will be scanned by postal processing equipment at step 310. Subsequent to scanning the stolen customized postage stamp, in step 312 the post removes the mail bearing the stamp and investigates the fraud. If at step 308 the thief did not choose to use the customized postage stamp; no postal fraud has been committed, step 314. It should be noted that no postal funds are lost, only the cost of supplies and manufacture of the sheet, borne by the retailer are lost

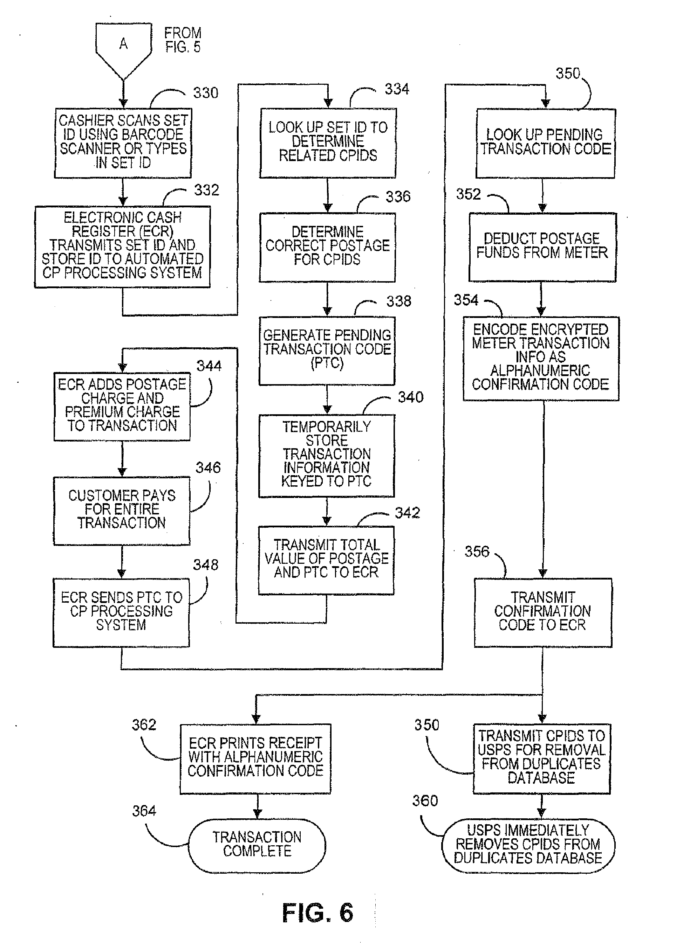

If the sheet of stamps is not stolen at step 304, the next step in the process will be step 316. If at step 316 someone does not purchase the customized postage stamp then the next step in the process is step 318, where the customized postage stamp is returned or destroyed. However, if at step 316, someone purchases the customized postage stamp then the next step in the process will be 330 (Fig. 6).

Fig. 6 is a flow chart for activating customized postage at point of sale. In step 330 the cashier scans the sheet identification, code 18 (Fig. 2), affixed to the customized sheet 17 (Fig. 2) of customized postage stamps 12 (Fig. 2) using a barcode scanner or by typing in set identification or using any other suitable means to record the set identification (RFID reader, image scanner, etc.). Then in step 332, electronic cash register 61 (Fig. 3) transmits the set identification and an identifier of the retail establishment, Store ID, to the customized postage supplier. Next, in step 334 the customized postage supplier's computer 50 accesses database 53 to determine the unique identifiers for all stamps 12 associated with the sheet identification, code 18. Then, at step 336 the correct postage is determined, for example by using the current first class one ounce postage rate or by having the cashier input the desired postage value for the stamps 12 on sheet 17. Next, at step 338, supplier's computer 50 generates a pending transaction code and, at step 340, the process temporarily stores the transaction information, including code 18 and desired postage value, keyed to the pending transaction code. In step 342 the total value of the postage and the pending transaction code is transmitted to the electronic cash register.

At this point the next step in the process is step 344. In step 344, electronic cash register 61 adds the postage charge and any premium charges, e.g. a service fee and/or retailer's markup, to the transaction. Then in step 346 the customer pays for the entire transaction. Now in step 348 the electronic cash register sends the pending transaction code to the supplier's computer 50. In step 350 the supplier's computer process looks up the pending transaction code and in step 352 postage funds are deducted from meter 54. Now in step 354 the meter encodes transaction information, e.g., by calculating a cryptographic code (message authentication code), as an alpha numeric conformation code. Then in step 356 the supplier's computer transmits the confirmation code to the electronic cash register. In step 358 the supplier's computer 50 transmits the unique identifiers of the purchased stamps 12, as determined in step 334 to postal computer 55. Then in step 360 the post immediately removes the customized postage identifications from the duplicates database 56. In step 362 the electronic cash register 61 prints receipts with an alpha numeric confirmation codes affixed thereto. The alpha numeric codes function as a receipt that the postage has been paid for and that the supplier's computer has informed the postal computer of the unique identifiers of the purchased stamps. Then in step 364 the transaction is complete.

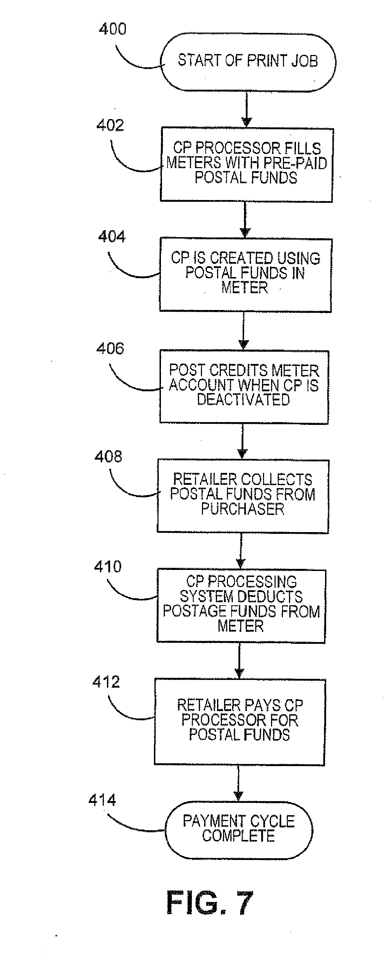

Fig 7 is a summary of payment processing transactions between the post customized postage supplier and the retailer. The process begins in step 400 the start of the print job. If necessary, funds are added in step 402 to the meter 54 with prepaid postal funds. Then in step 404 the customized postage is created using the postal funds that are in the meter. As previously described this process also includes transmitting the unique identifiers of the created stamps to the postal computer, step 210 (Fig. 4). Next, in step 406, the post credits the meter account when customized postage is deactivated. The stamps are then distributed to the retailer and in step 408 the retailer collects the postal funds from the purchaser. Now in step 410, as described in steps 332-336 (Fig. 6) the supplier's computer deducts the appropriate postage funds from the meter 54. Next in step 412, the retailer pays the customized postage processor for postal funds plus interest on a periodic basis. Then in step 414, the payment cycle is complete.

The above specification describes a new and improved method for controlling inventory cost, risk of theft, and outdated inventory, for customized postage stamps containing an IBI and/or any postage stamp containing an IBI. It is realized that the above description may indicate to those skilled in the art additional ways in which the principles of this invention may be used. Therefore, it is intended that this invention be limited only by the scope of the appended claims.

## Claims

1. A method of processing postage stamps, comprising the steps of:
offering by a supplier (54) a postage stamp (12) for sale by a distributor to a consumer, wherein the stamp has a unique identification code (13) and is initially inactive:
distributing by the supplier the postage stamp (12);
informing a post (55) by a supplier that the unique identification code is inactive;
activating the stamp (12) for use; and
accounting by the supplier for postage associated with the stamp (12) after the stamp has been distributed to a consumer.

2. The method claimed in Claim 1, wherein the activating step further includes the steps of:
receiving by the supplier an indication that the stamp (12) has been sold; and
notifying the post by the supplier of the stamp activation.

3. The method claimed in Claim 1 or 2, wherein the stamp (12) is a customized stamp.

4. The method claimed in any preceding claim, wherein a value of the stamp (12) is associated with the unique identification code.

5. The method claimed in any preceding claim, further including the step of:
changing the value of the stamp (12) associated with the unique identification code when the stamp is sold.

6. A method of processing postage stamps, comprising the steps of:
offering a postage stamp (12) for sale by a distributor to a consumer, wherein the stamp has a unique identification code (13) and is initially inactive and is stored in a data base (53) that contains used unique identification codes of other postage stamps; and
informing a post (55) by a distributor the unique identification codes of postage stamps that have been purchased by the consumer for removal from the data base.

7. The method claimed in Claim 6, wherein the stamp (12) is a customized stamp.

8. The method claimed in Claim 6 or 7, wherein a value of the stamp (12) is associated with the unique identification code.

9. The method claimed in Claim 6, 7 or 8, further including the step of:
changing the value of the stamp (12) associated with the unique identification code when the stamp is sold.

10. The method claimed in any one of Claims 6 to 9, further including the step of:
accounting by the distributor to the post for the payment of postage.

11. The method claimed in any one of Claims 6 to 10, further including the step of:
accounting by the distributor to the supplier for the payment of postage.

12. A system for processing postage stamps, comprising:
a supplier processor (50) in communication with a postal processor (55) and a distributor processor wherein the supplier processor creates stamps having unique identification codes, informs the postal processor (55) that the unique identification codes are inactive, receives from the distributor's processor the unique identification codes of stamps that have been sold, informs the postal processor (55) of unique identification codes that have been sold; and accounts to the post for the payment of postage.
